# EUROPÄISCHE PATENTANMELDUNG

(11) **EP 3 476 457 A1**
(43) Veröffentlichungstag der Anmeldung: **01.05.2019**
(21) Anmeldenummer: 18199505.1
(22) Anmeldetag: 10.10.2018
(51) Int. Cl.: B01D 39/16, B01D 24/10

(54) **FILTEREINSATZ UND FILTRATIONSANORDNUNG MIT FILTEREINSATZ**

(30) Priorität: 18.10.2017 DE 102017124251
(71) Anmelder: KUENZEL advanced weaving technologies GmbH, 95213 Münchberg (DE)
(72) Erfinder: KÜNZEL, Ludwig, 95194 Regnitzlosau (DE)
(74) Vertreter: Reichert & Lindner Partnerschaft Patentanwälte

(57) **Zusammenfassung**

Es ist ein zylinderförmiger oder rohrförmiger Filtereinsatz (10) aus einem Filtermaterial (2) für flüssige Medien (7) offenbart. Eine Filtrationsanordnung (30) dient zur Aufnahme des zylinderförmigen oder rohrförmigen Filtereinsatzes (10). Die Filtrationsanordnung (30) umfasst ein Filtergehäuse (31) mit einem Zulauf (32) für das zu filternde Medium (7) und einem Ablauf (34) für das gefilterte Medium (7).

## Beschreibung

Die vorliegende Erfindung betrifft einen Filtereinsatz für flüssige Medien. Der Filtereinsatz besteht im Wesentlichen aus einem quaderförmigen Filtermaterial, das aus einer Verbundvlieslage aus mehreren einzelnen Vlieslagen besteht, die aus einer Vielzahl von Endlosfasern aufgebaut ist. Die Endlosfasern sind untereinander verbunden, wobei die Vielzahl von Endlosfasern einer jeden Vlieslage zu einem definierten Grad mit anderen Endlosfasern stoffschlüssig miteinander verbunden sind. Die Endlosfasern einer Vlieslage greifen in benachbarte Vlieslagen und sind ebenfalls gemäß dem definierten Grad mit den Endlosfasern der benachbarten einzelnen Vlieslagen verbunden.

Ferner betrifft die Erfindung eine Filtrationsanordnung für flüssige Medien. Die Filtrationsanordnung umfasst ein Filtergehäuse, das einen Zulauf für das zu filternde Medium und einen Ablauf für das gefilterte Medium besitzt. Ein Filtereinsatz für das Filtergehäuse weist im Wesentlichen eine Höhe des Filtergehäuses auf. Der Filtereinsatz umfasst mindestens ein elastisch deformierbares Einzelelement, das aus einem im Wesentlichen quaderförmigen Filtermaterial gebildet ist. Das Filtermaterial ist aus mehreren einzelnen Vlieslagen aus einer Vielzahl von Endlosfasern aufgebaut, die untereinander verbunden sind,

Für kleine und mittlere Pools, Whirlpools, etc. existieren zylinderförmige Filter, die nach dem Gebrauch, bzw. dem Ende der Lebensdauer des Filters ausgetauscht und entsorgt werden.

Die deutsche Patentanmeldung DE 198 06 924 A1 betrifft einen Flüssigkeitsfilter, insbesondere Wasserfilter für Schwimmbäder, Schwimmbecken oder dergleichen, in dem mindestens ein mit einer losen Schüttung aus Sand, Kies und/oder Aktivkohle befüllter Behälter angeordnet ist. Der Behälter weist einen Wassereinlass auf, in den mittels einer Pumpe das zu filternde Wasser zugeführt wird. Über einen Wasserauslass wird das gefilterte Wasser wieder in den Pool zurückgeführt. Als Behälter für das Filtermaterial wird ein Sack oder Beutel aus einem feinporigen Gewebe verwendet, dessen Maschenweite kleiner ist, als die kleinste Partikelgröße der Schüttung.

Das deutsche Gebrauchsmuster DE 200 10 675 U1 offenbart einen Kartuschenfilter für Schwimmbecken mit auswechselbarem Filtereinsatz. Das verwendete Filtermaterial kann aus dem Filterkörper entnommen und gereinigt werden. Ein neues oder gereinigtes Filtervlies kann mittels einfachem Aufrollen eingebaut werden.

Die deutsche Patentanmeldung DE 11 2009 000 742 T5 offenbart ebenfalls einen austauschbaren Filtereinsatz mit Entfernungsfunktion. Die austauschbare Filterkartusche besitzt ein Filtermedium, das zick-zack-förmig zwischen zwei Endkappen angeordnet ist.

Die deutsche Patentschrift DE 11 2011 102 094 T5 offenbart modulare Filterelemente zur Verwendung in einer Filter-in-Filter-Patrone. Es ist hierzu ein äußeres Filterelement und ein inneres Filterelement vorgesehen, die zusammengebaut werden können, um eine Filterpatrone zur Verwendung bei Abscheidungsverfahren und - systemen auszubilden. Das äußere Filterelement fungiert i. d. R. als koaleszierendes Element und das innere Element fungiert i. d. R. als ein Partikelfilterelement.

Die deutsche Gebrauchsmusterschrift DE 20 2011 109 098 U1 offenbart einen Filter zum Filtern von Medien mit einem plissierten, zylindrischen Filterelement, das zwischen einer durchbrochenen zylindrischen Rückstausicherung und einem durchbrochenen zylindrischen Kern angeordnet ist. Das Filterelement ist in plissierten Falten angeordnet, wobei eine Mehrzahl von Falten eine erste Faltenhöhe aufweist, die größer ist, als die Differenz zwischen dem Radius der Rückstausicherung und dem Radius des Kerns. Die plissierten Falten sind von der Außenfläche des Kerns weg gerichtet und jeweils gegenüber einer Radialen um einen Neigungswinkel geneigt.

Das deutsche Gebrauchsmuster DE 20 2012 003 179 U1 offenbart selbsttragende Strukturen mit adsorptiven Eigenschaften. Die adsorptive Struktur umfasst eine Vielzahl von einzelnen Adsorberpartikeln. Die einzelnen Adsorberpartikel sind mittels mindestens eines Hydrokolloids zu einer selbsttragenden dreidimensionalen adsorptiven Struktur, insbesondere einem adsorptivem Formkörper, verbunden.

Die deutsche Gebrauchsmusterschrift DE 20 2015 101 238 U1 offenbart einen Filtereinsatz mit einer Mehrzahl von Filtergeflechten, die je eine Mehrzahl von Fasern aufweisen. Die Fasergeflechte können von einer Flüssigkeit durchströmt werden. Die Fasergeflechte sind dabei in einem Beutel angeordnet, der selbst von Flüssigkeit durchströmt werden kann.

Die europäische Patentschrift EP 1 736 049 B1 offenbart eine Innenfiltereinrichtung für Aquarien zum Reinigen von Wasser. Die Innenfiltereinrichtung umfasst ein Gehäuse mit einem Gehäuseboden, einem Deckenbereich sowie Ansaugöffnungen, wobei im Gehäuse ein Filterelement aufgenommen ist, welches einen Saugkanal zur Förderung von Wasser aufweist. Der Saugkanal besitzt ein erstes oberes Ende, das strömungsmäßig mit einer Ansaugvorrichtung verbunden werden kann, wobei das Gehäuse einen die Ansaugöffnungen aufweisenden ersten Bereich zum Ansaugen des Wassers aus dem Aquarium aufweist, der von einem zweiten Bereich zur Aufnahme des Filterelements durch eine im Wesentlichen vertikal verlaufende flüssigkeitsdichte Trennwand räumlich getrennt ist.

Die deutsche Patentschrift DE 10 2016 108 558 B3 offenbart ein Filtermaterial für flüssige Medien aus mehreren einzelnen Vlieslagen. Jede Vlieslage umfasst eine Vielzahl von Endlosfasern, die zu einem definierten Grad mit anderen Endlosfasern stoffschlüssig miteinander verbundenen sind. Ebenso sind benachbarte Vlieslagen zu einem gewissen Grad mit den benachbarten Vlieslagen verbunden und bilden dadurch eine Verbundvlieslage, die eine definierte Oberseite und definierte Unterseite besitzt. Das Filtermaterial der Verbundvlieslage ist in geometrische Filterkörper geschnitten, die die Oberseite und Unterseite der Verbundvlieslage aufweisen.

Die deutsche Patentanmeldung DE 39 40 264 A1 offenbart ein mehrschichtiges Filtermaterial aus Vliesstoffen. Das Filtermaterial ist aus Fasern oder Filamenten gleicher oder verschiedenartiger Polymere gefertigt.

Der Website www.teich-filter.eu/teichfilter-aufbau-reihenfolge-filtermedien kann eine Bauanleitung für einen Teichfilter entnommen werden, so dass die bestmögliche Wirkung entsteht. Die richtige Reihenfolge der Filtermedien und der Aufbau des Teichfilters sind extrem wichtig. Es ist entscheidend, welche Filtermedien in welche Filterkammer kommen, damit der Einklang der Grobfilterung, biologischer Filterung, mechanischer Filterung und Feinfilterung überhaupt stattfinden kann.

Es ist Aufgabe der vorliegenden Erfindung, einen Filtereinsatz zu schaffen, der hinsichtlich seiner Filtrationseigenschaften effektiv, effizient und zuverlässig und dabei gleichzeitig kostengünstig, einfach zu wechseln und nachhaltig ist.

Diese Aufgabe wird erfindungsgemäß von einem Filtereinsatz mit den Merkmalen des Anspruchs 1 gelöst.

Eine weitere Aufgabe der Erfindung ist, eine Filtrationsanordnung für flüssige Medien bereitzustellen, die hinsichtlich ihrer Filtrationseigenschaften für das zu filternde flüssige Medium effektiv, zuverlässig, leicht auszubauen, kostengünstig und nachhaltig in seiner Verwendung ist.

Diese Aufgabe wird durch eine Filtrationsanordnung für flüssige Medien gelöst, die die Merkmale des Anspruchs 9 umfasst.

Der erfindungsgemäße Filtereinsatz für flüssige Medien zeichnet sich dadurch aus, dass der Filtereinsatz aus mindestens einem elastisch deformierbaren Einzelelement besteht. Das mindestens eine elastisch deformierbare Einzelelement ist aus dem quaderförmigen Filtermaterial gebildet. Das mindestens eine Einzelelement besitzt einen äußeren Durchmesser, der größer ist als ein Durchmesser eines Filtergehäuses. Somit ist sichergestellt, dass das mindestens eine elastisch deformierbare Einzelelement an einer einen Innenraum des Filtergehäuses definierenden inneren Wand anliegt.

Eine weitere Ausgestaltungsmöglichkeit des Filtereinsatzes bzw. des Einzelelements kann sein, dass der Filtereinsatz eine zylinderförmige Gestalt besitzt.

Gemäß einer möglichen weiteren Ausführungsform kann das mindestens eine zylinderförmige Einzelelement aus dem elastisch deformierbaren Filtermaterial entlang einer Schnittlinie geschnitten sein. Die einzelnen Vlieslagen sind senkrecht zu einer Längsachse des zylinderförmigen Einzelelements ausgerichtet.

Gemäß einer möglichen Ausführungsform kann der Filtereinsatz bzw. das mindestens eine Einzelelement rohrförmig ausgestaltet sein. Der Filtereinsatz bzw. das mindestens eine Einzelelement definiert eine Außenfläche und eine Innenfläche.

Sowohl bei dem quaderförmigen Filtermaterial, als auch im betriebsbereiten rohrförmigen Filtereinsatz bzw. Einzelelement sind die Vlieslagen parallel zueinander angeordnet. Bei einer möglichen Ausführungsform des rohrförmigen Filtereinsatzes bzw. Einzelelements verlaufen die Vlieslagen parallel zueinander und sind im Wesentlichen konzentrisch zu einer Längsachse des rohrförmigen Filtereinsatzes bzw. der rohrförmigen Einzelelemente angeordnet.

Gemäß einer Ausführungsform des Filtereinsatzes können die rohrförmigen Einzelelemente aus mindestens einem zu einem Rohr geformten quaderförmigen Filtermaterial bestehen. Gemäß einer weiteren möglichen Ausführungsform kann das quaderförmige Filtermaterial, aus dem die rohrförmigen Einzelelemente gebildet werden, derart gestaltet sein, dass sich mindestens zwei der Vlieslagen des quaderförmigen Filtermaterials hinsichtlich der Materialdichte unterscheiden. Gemäß einer möglichen Ausführungsform wird bei der Herstellung der rohrförmigen Einzelelemente diejenige Vlieslage mit der geringeren Materialdichte zum Mantel des rohrförmigen Einzelelements hin ausgerichtet ist. Die Vlieslage mit der größeren Materialdichte ist zum Kern des rohrförmigen Einzelelements hin ausgerichtet. Die Vlieslagen mit der unterschiedlichen Materialdichte kann man mit einer entsprechenden farblichen Kennung unterscheiden (wie z.B. Einfärben der Vlieslage). Es sei an dieser Stelle erwähnt, dass es nicht zwingend erforderlich ist, dass das größere Flächengewicht außen am rohrförmigen Einzelelement angebracht ist. Wie oben beschrieben, sollte die gröbere Ausführung des quaderförmigen Filtermaterials außen am Einzelelement angebracht werden. Ein grobes Material kann durchaus feiner sein als ein Material mit höherem Flächengewicht. Dies kann über unterschiedliche Materialdichten und einer zusätzlichen Verdichtung eingestellt werden. So kann ein Filtermaterial mit einem Flächengewicht von 500 Gramm/qm gröber filtern, als ein Filtermaterial mit einem Flächengewicht von nur 300 Gramm/qm, das jedoch stärker komprimiert ist. Auf diese Weise entstehen kleinere Durchlässe im Filtermaterial trotz der geringeren Materialdichte.

Gemäß möglichen Ausführungsformen, kann das zylinderförmige oder rohrförmige Einzelelement aus dem quaderförmigen Filtermaterial geschnitten werden. Die Vlieslagen liegen dann im Wesentlichen senkrecht zu einer Schnittlinie durch das quaderförmige Filtermaterial.

Da die Höhe der zylinderförmigen oder rohrförmigen Einzelelemente nicht immer der erforderlichen Gesamthöhe des betriebsbereiten Filtereinsatzes entsprechen, können mehrere rohrförmige Einzelelemente entlang einer Längsachse gestapelt werden, um den betriebsbereiten Filtereinsatz zu bilden.

Damit das zylinderförmige oder rohrförmige Einzelelement seine Form für den Transport, die Lagerung und/oder die Handhabung beibehält, ist mindestens ein Stabilisierungsmittel vorgesehen. Das Stabilisierungsmittel kann verschiedene Ausgestaltungen aufweisen. Für die Stabilisierung des zylinderförmigen oder rohrförmigen Einzelelements können auch Mischformen der Stabilisierungsmittel verwendet werden.

Der Filtereinsatz kann auch einen Beutel umfassen, der derart gestaltet ist, dass er an die Form des zylinderförmigen Einzelelements angepasst ist. Der Beutel ist aus einem für das zu filternde Medium durchlässigen, netzartigen Material gefertigt und verschließbar ausgebildet. Gemäß einer möglichen Ausführungsform ist zum Verschließen ein Reißverschluss vorgesehen.

Der Beutel kann auch aus dem Filtermaterial mit den mehreren benachbarten einzelnen Vlieslagen gefertigt sein. Der verschließbare Beutel kann mit mehreren geometrischen Filterkörpern gefüllt werden.

Bevorzugt sind die Endlosfasern des Filtermaterials aus Polyester. Die Endlosfasern des Filtermaterials sind zu 60% bis 90 % aus Voll- oder Hohlfasern und zu 10% - 40% aus Schmelzfasern hergestellt. Die Endlosfasern können dabei eine runde und ovale Querschnittsform besitzen. Das aus den Endlosfasern hergestellte Filtermaterial besitzt ein Flächengewicht von 250g bis 1800g/ Quadratmeter. Es ist dabei ebenfalls vorstellbar, dass das Flächengewicht des Filtermaterials von Vlieslage zu Vlieslage variiert. Die Endlosfasern können eine Faserstärke von ungefähr 40 µm besitzen.

Das erfindungsgemäße Filtermaterial ist von Vorteil, da es für das zu filternde Medium eine dreidimensionale Filterung ermöglicht. Diese dreidimensionale Filterung wird dadurch bereitgestellt, da die einzelnen Endlosfasern innerhalb jeder Vlieslage sich ebenfalls in allen drei Dimensionen erstrecken. Für das zu filternde Medium muss somit ein dreidimensionaler Weg durch das Filtermaterial zurückgelegt werden. Somit steht für die Filterung des zu filternden Mediums eine ausreichende Wegstrecke zur Verfügung, um das mit Partikeln belastete zu filternde Medium effektiv zu filtern. Hinzu kommt, dass das erfindungsgemäße Filtermaterial einfach ausgewaschen und somit wieder für eine erneute Verwendung zur Filterung herangezogen werden kann. Ebenso ermöglicht die spezielle Gestaltung des Filtermaterials für die Umwälzpumpe eine kleinere Auslegung bzw. die Umwälzpumpe kann mit einer geringeren Leistung betrieben werden, was wiederum zu einer Energieersparnis führt.

Die erfindungsgemäße Filtrationsanordnung für flüssige Medien zeichnet sich dadurch aus, dass ein Filtergehäuse mit einem Zulauf für das flüssige Medium und einem Ablauf für das gefilterte Medium vorgesehen ist. Die Filtrationsanordnung besitzt einen Filtereinsatz im Filtergehäuse, der im Wesentlichen eine Höhe des Filtergehäuses aufweist. Der Filtereinsatz umfasst mindestens ein elastisch deformierbares Einzelelement, das aus einem im Wesentlichen quaderförmigen Filtermaterial gebildet ist. Das Filtermaterial ist aus mehreren einzelnen Vlieslagen aus einer Vielzahl von Endlosfasern aufgebaut, die untereinander verbunden sind. Erfindungsgemäß besitzt das mindestens eine elastisch deformierbare Einzelelement einen äußeren Durchmesser, der größer ist als ein Durchmesser eines Filtergehäuses. Dadurch liegt das mindestens eine elastisch deformierbare Einzelelement zumindest an einer einen Innenraum des Filtergehäuses definierenden inneren Wand an.

Gemäß einer erfindungsgemäßen Ausführungsform ist in der Filtrationsanordnung eine Aufnahme für den Filtereinsatz vorgesehen. Die Aufnahme umfasst eine für das zu filternde Medium durchlässige äußere zylinderförmige Wand und eine innere zylinderförmige Wand. Zwischen der äußeren zylinderförmigen Wand und der inneren zylinderförmigen Wand sitzt ein betriebsbereiter, rohrförmiger Filtereinsatz, der aus mindestens einem rohrförmigen Einzelelement besteht und im Wesentlichen eine Höhe der Aufnahme aufweist.

Gemäß einer möglichen Ausführungsform kann der Filtereinsatz aus mindestens einem zylinderförmigen Einzelelement bestehen.

Das mindestens eine zylinderförmige Einzelelement kann gemäß einer möglichen Ausführungsform von einem Beutel umgeben sein, der die Form des zylinderförmigen Einzelelements besitzt. Der Beutel ist aus einem für das zu filternde Medium durchlässigen, netzartigen Material gefertigt und verschließbar ausgebildet.

Der Filtereinsatz kann gemäß einer möglichen Ausführungsform einen durchlässigen Beutel aus netzartigem Material für das zu filternde Medium umfassen. In den Beutel können mehrere aus dem Filtermaterial geschnittene geometrische Filterkörper gefüllt werden. Der Beutel ist nach dem Füllen verschließbar.

Der gefüllte Beutel ist derart formbar, dass er an der den Innenraum definierenden inneren Wand des Filtergehäuses anliegt.

Der zylinderförmige oder rohrförmige Filtereinsatz stellt eine dreidimensionale Filterung für das zu filternde Medium bereit. Diese dreidimensionale Filtereigenschaft wird durch die dreidimensionale Anordnung der einzelnen Endlosfasern in den einzelnen Vlieslagen erreicht. Die Endlosfasern können eine runde und/oder ovale Querschnittsform besitzen. Das Filtermaterial kann ein Flächengewicht von 250g - 1800g/Quadratmeter besitzen. Das Flächengewicht kann innerhalb des quaderförmigen Filtermaterials variieren.

Eine weitere Ausführungsform der erfindungsgemäßen Filtrationsanordnung ist, dass in der Filtrationsanordnung der rohrförmige Filtereinsatz sitzt. Der rohrförmige Filtereinsatz ist dabei derart ausgebildet, dass der Filtereinsatz von einer äußeren, zylinderförmigen Stabilisierung und einer inneren, zylinderförmigen Stabilisierung umgeben ist. Damit das zu filternde Medium zum Filtermaterial des Filtereinsatzes gelangen kann, hat die äußere zylinderförmige Stabilisierung mehrere Durchlässe ausgebildet. Damit das gefilterte flüssige Medium wieder aus der Filtrationsanordnung gelangen kann, hat die innere zylinderförmige Stabilisierung mehrere Durchlässe ausgebildet. Bei dieser Ausführungsform der Filtrationsanordnung entspricht die äußere zylinderförmige Stabilisierung einer äußeren, zylinderförmigen Wand der Aufnahme und die innere zylinderförmige Stabilisierung entspricht der inneren zylinderförmigen Wand der Aufnahme.

Eine weitere Möglichkeit der Ausgestaltung der Filtrationsanordnung ist, dass der Filtereinsatz direkt in das Filtergehäuse der Filtrationsanordnung eingesetzt ist. Der Filtereinsatz ist derart formbar bzw. gestaltet, dass der Filtereinsatz an einer einen Innenraum definierenden inneren Wand des Filtergehäuses anliegt. Der Filtereinsatz für das zu filternde Medium ist zwischen dem Zulauf und dem Ablauf positioniert. Somit wird erreicht, dass das zu filternde Medium auf Filtermaterial beim Filtrationsprozess trifft. Der Filtereinsatz kann bei dieser Ausführungsform aus mindestens einem zylinderförmigen Einzelelement bestehen. Das mindestens eine zylinderförmige Einzelelement kann von einem Beutel umgeben sein, der die Form des zylinderförmigen Einzelelements besitzt. Der Beutel ist aus einem für das zu filternde Medium durchlässigen Material gefertigt und verschließbar ausgebildet.

Der Filtereinsatz für die Filtrationsanordnung kann ebenfalls einen Beutel umfassen, der aus einem für das zu filternde Medium durchlässigen Material besteht. In den Beutel können mehrere aus dem Filtermaterial geschnittene geometrische Filterkörper gefüllt werden. Der Beutel ist nach dem Füllen ebenfalls verschließbar ausgebildet. Der gefüllte Beutel kann derart geformt werden, dass er an der den Innenraum definierenden inneren Wand des Filtergehäuses der Filtrationsanordnung anliegt.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Fig. 1: eine schematische Schnittansicht durch eine Verbundvlieslage, die gemäß der gegenwärtigen Erfindung Anwendung findet;
- Fig.2: eine vergrößerte Ansicht des Filtermaterials mit der schematischen Darstellung der Einlagerung von Schmutzpartikeln;
- Fig. 3: eine schematische Seitenansicht eines quaderförmigen Filtervlieses, aus dem der rohrförmige Filtereinsatz gefertigt werden kann;
- Fig. 4: eine schematische Ansicht einer Ausführungsform eines geometrischen Formkörpers, der aus dem Filtermaterial (Verbundvlieslage) gefertigt worden ist;
- Fig. 5: eine Draufsicht auf die obere Fläche des Filtermaterials, wobei eine Schnittlinie für den zylinderförmigen Filtereinsatz bzw. ein zylinderförmiges Einzelelement für den zylinderförmigen Filtereinsatz angedeutet ist;
- Fig. 6: eine perspektivische Ansicht des ausgeschnittenen zylinderförmigen Filtereinsatzes bzw. des zylinderförmigen Einzelelements für den zylinderförmigen Filtereinsatz;
- Fig. 7: eine perspektivische Ansicht der Zusammenstellung mehrerer zylinderförmiger Einzelelemente für den zylinderförmigen Filtereinsatz;
- Fig. 8: eine schematische Ansicht einer Filtrationsanordnung zum Filtern von flüssigen Medien;
- Fig. 9: eine Schnittansicht durch die Filtrationsanordnung der Fig. 8 mit einem eingesetzten zylinderförmigen Filtereinsatz;
- Fig. 10: eine Draufsicht auf die obere Fläche des Filtermaterials, wobei eine Schnittlinie für den rohrförmigen Filtereinsatz bzw. ein rohrförmiges Einzelelement für den rohrförmigen Filtereinsatz angedeutet ist;
- Fig. 11: eine perspektivische Ansicht des ausgeschnittenen rohrförmigen Filtereinsatzes bzw. des rohrförmigen Einzelelements für den rohrförmigen Filtereinsatz;
- Fig. 12: eine perspektivische Ansicht der Zusammenstellung mehrerer rohrförmiger Einzelelemente für den rohrförmigen Filtereinsatz;
- Fig. 13: eine perspektivische Ansicht des rohrförmigen Filtereinsatzes bzw. eines rohrförmigen Einzelelements, der bzw. das in einer Ausführungsform der Aufnahme sitzt;
- Fig. 14: eine Draufsicht auf einen rohrförmigen Filtereinsatz bzw. ein rohrförmiges Einzelelement, bei dem die einzelnen Vlieslagen konzentrisch angeordnet sind;
- Fig. 15A und 15B: verschiedene Ansichten einer lösbaren Verbindung zur Erzeugung des rohrförmigen Filtereinsatzes;
- Fig. 16A und 16B: verschiedene Ansichten der permanenten Verbindung zur Erzeugung des rohrförmigen Filtereinsatzes;
- Fig. 17: eine perspektivische Ansicht einer Aufnahme für den rohrförmigen Filtereinsatz;
- Fig. 18: eine schematische Schnittansicht einer Filtrationsanordnung, bei der der erfindungsgemäße rohrförmige Filtereinsatz Verwendung findet;
- Fig. 19: eine Schnittansicht einer weiteren möglichen Ausführungsform der Ausgestaltung des Filtereinsatzes;
- Fig. 20: eine Schnittansicht einer zusätzlich möglichen Ausführungsform der Ausgestaltung des Filtereinsatzes;
- Fig. 21: im Teilschnitt eine Ansicht einer möglichen Ausführungsform der Ausgestaltung des Filtereinsatzes; und
- Fig. 22: im Teilschnitt eine Ansicht einer weiteren möglichen Ausführungsform der Ausgestaltung des Filtereinsatzes.

Für gleiche oder gleich wirkende Elemente der Erfindung werden identische Bezugszeichen verwendet. Es ist für einen Fachmann selbstverständlich, dass die in der Beschreibung vorgestellten Ausführungsformen der Filtrationsanordnung und des rohrförmigen Filterkörpers keine Beschränkung der Erfindung darstellen sollen.

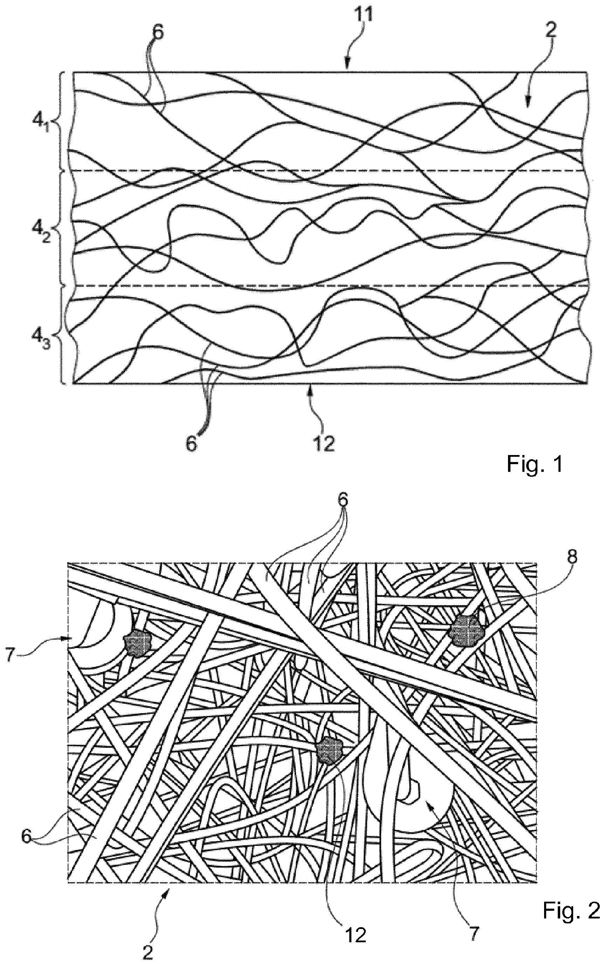

**Figur 1** zeigt eine schematische Ansicht eines Filtermaterials 2. Das Filtermaterial 2 besteht in der hier gezeigten Darstellung aus drei einzelnen Vlieslagen 4₁, 4₂ und 4₃. Es ist für einen Fachmann selbstverständlich, dass die hier gewählte Darstellung und der hier gewählte Aufbau des Filtermaterials 2 nicht als Beschränkung der Erfindung aufgefasst werden kann. Das Filtermaterial 2 kann je nach Anforderung an die Filtereigenschaften bzw. die mechanischen Eigenschaften, mit einer beliebigen Anzahl von Vlieslagen 4₁, 4₂, ..., 4_{N} ausgeführt werden. Die einzelnen Vlieslagen 4₁, 4₂, ..., 4_{N} besitzen eine Vielzahl von Endlosfasern 6, die auch auf benachbarte Vlieslagen 4₁, 4₂, ..., 4_{N} übergreifen. Die Endlosfasern 6 in den einzelnen Vlieslagen 4₁, 4₂, ..., 4_{N} und die Endlosfasern 6, die auf benachbarte Vlieslagen 4₁, 4₂, ..., 4_{N} übergreifen, sind in einem gewissen Umfang (Anzahl der Verbindungen (Vernetzungen) der Endlosfasern pro Volumeneinheit) stoffflüssig miteinander verbunden.

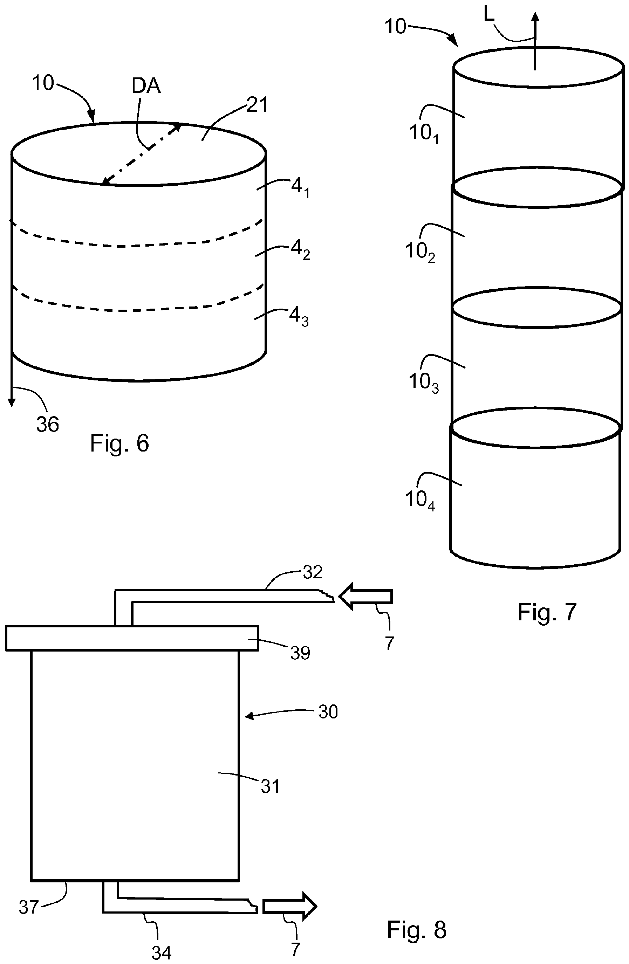

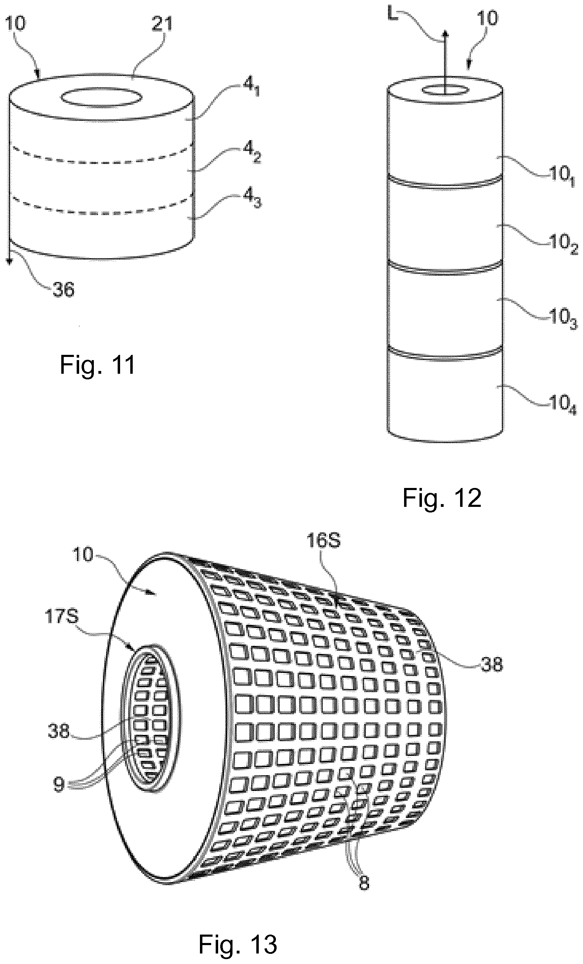

**Figur 2** zeigt eine vergrößerte Ansicht des Filtermaterials 2, bei der die einzelnen Endlosfasern 6 in ihrer wirren Lage im Filterelement bzw. in den einzelnen Vlieslagen 4₁, 4₂, ..., 4_{N} vorliegen. Das flüssige zu filternde Medium 7 tritt zwischen den Endlosfasern 6 durch das Filtermaterial 2 der einzelnen Vlieslagen 4₁, 4₂, ..., 4_{N} hindurch. Dabei werden die Schmutzpartikel 12 abgegeben und bleiben an den Endlosfasern 6 haften. Durch diesen Effekt erreicht man eine Reinigung des flüssigen zu filternden Mediums 7. Gerade durch die wirre Lage der Endlosfasern 6 im Filtermaterial 2 muss das zu filternde Medium 7 einen dreidimensional gerichteten Weg durch das Filtermaterial 2 bzw. den rohrförmigen Filtereinsatz 10 nehmen. Der Weg des zu filternden Mediums 7 durch das Filtermaterial 2 bzw. den Filtereinsatz 10 (rohrförmig oder zylindrisch) (siehe Figuren 6 oder 11) wird somit lang, so dass dadurch trotz der geringen Volumendichte des Filtermaterials 2 eine effektive Filterung erreicht wird. Hinzu kommt, dass der Filtereinsatz 10 dem zu filternden Medium 7 einen geringen Strömungswiderstand entgegensetzt, was zu Kosteneinsparungen bei der Umwälzpumpe führt.

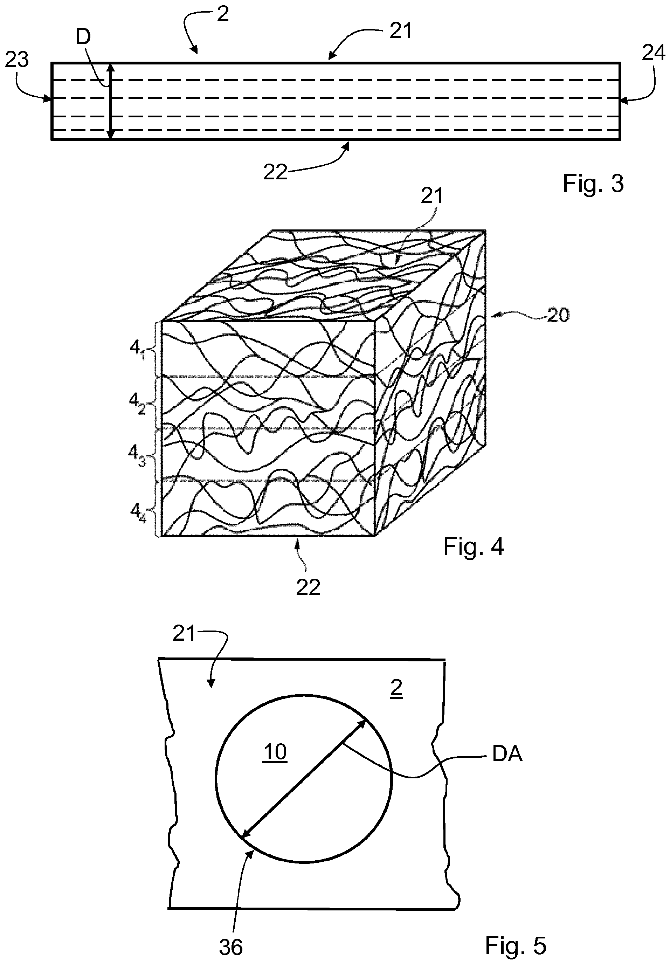

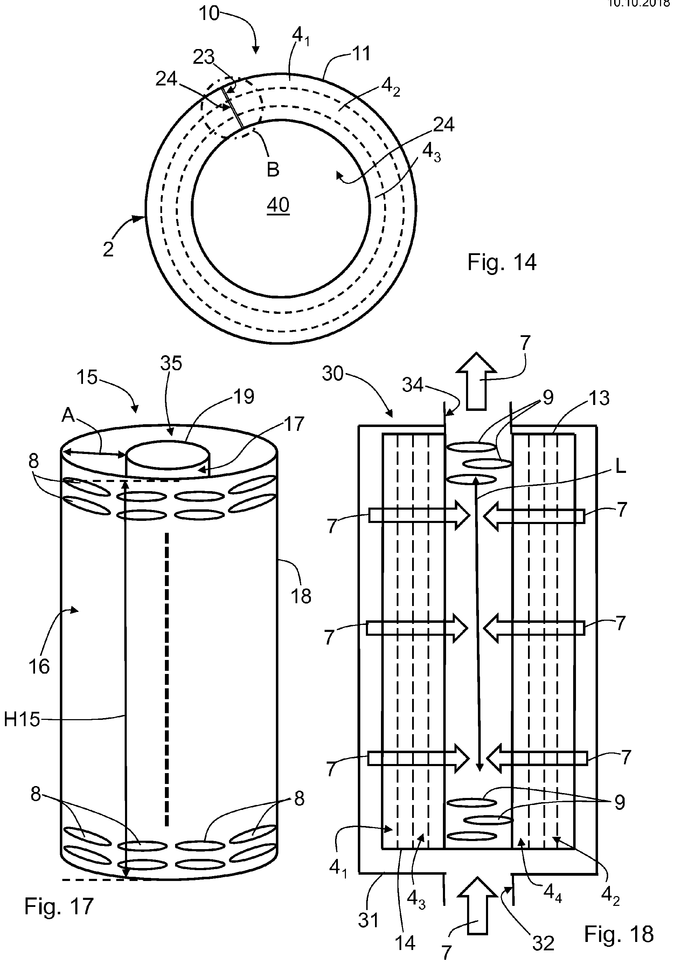

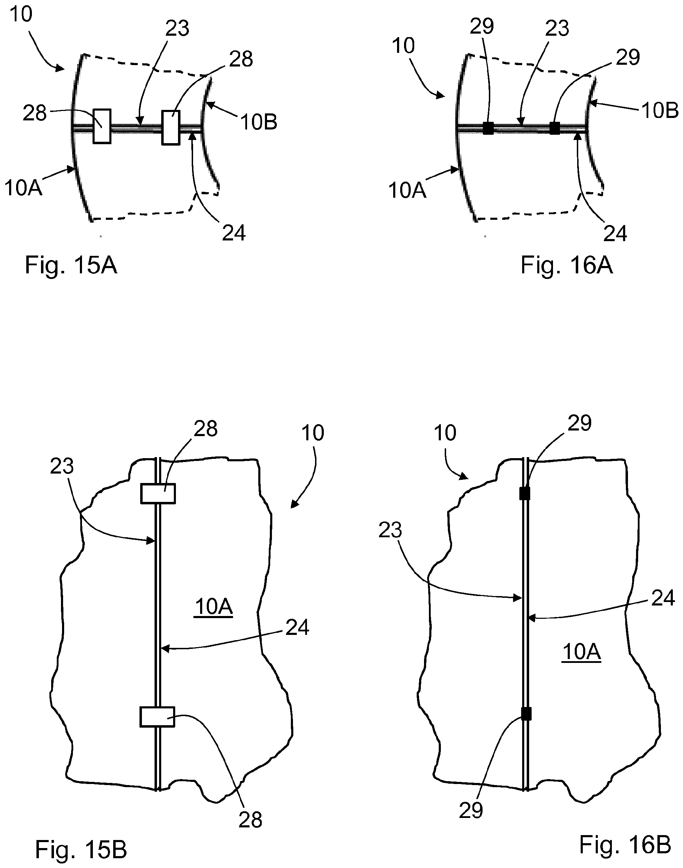

Wie in **Figur 3** dargestellt, ist das Filtermaterial 2 im Wesentlichen quaderförmig aufgebaut und besitzt eine obere Fläche 21, eine untere Fläche 22, eine erste Stirnfläche 23 und eine zweite Stirnfläche 24. Zwischen der oberen Fläche 21 und der unteren Fläche 22 sind die mehreren Vlieslagen 4₁, 4₂, ..., 4_{N} (siehe Figur 4) angeordnet und verlaufen im Wesentlichen parallel zu der oberen Fläche 21 und der unteren Fläche 22 des quaderförmigen Filtermaterials 2. Der Filtereinsatz 10 wird dadurch gebildet, dass die erste Stirnfläche 23 und die zweite Stirnfläche 24 aneinanderstoßen. Dadurch verlaufen die einzelnen Vlieslagen 4₁, 4₂, 4₃ und 4₄ parallel zueinander und sind ebenfalls konzentrisch zu einer Längsachse L (siehe Figur 14) des Filtereinsatzes 10 angeordnet. Der Filtereinsatz 10 definiert somit eine sich in Richtung der Längsachse L erstreckende Außenfläche 10A und ebenfalls eine sich in Richtung der Längsachse L erstreckende Innenfläche 10B (siehe Figuren 15A und 16A). Obwohl bei der Beschreibung zu den Figuren 4 und 5 vier Vlieslagen 4₁, 4₂, 4₃ und 4₄ beschrieben worden sind, soll dies nicht als eine Beschränkung der Erfindung aufgefasst werden. Es ist für einen Fachmann selbstverständlich, dass für die Ausbildung des Filtereinsatzes 10 bzw. des Filtermaterials 2 eine beliebige Anzahle von Vlieslagen 4₁, 4₂, ..., 4_{N}, verwendet werden kann.

In **Figur 4** ist ein geometrischer Filterkörper 20 für die Filtration von flüssigen Medien 7, insbesondere Wasser, dargestellt. Der geometrische Filterkörper 20 wird aus dem Filtermaterial 2 (siehe Fig. 3) geschnitten, so dass man einzelne, individuelle Filterkörper 20 erhält. Entsprechend der Ausgestaltung des Filtermaterials 2 mit den einzelnen Vlieslagen 4₁, 4₂, ..., 4_{N} besitzt auch der geometrische Filterkörper 20 die entsprechende Anzahl von Vlieslagen 4₁, 4₂, ..., 4_{N}. Ebenso weist der geometrische Filterkörper 20 die obere Fläche 21 und die untere Fläche 22 des Filtermaterials 2 auf, aus dem er hergestellt bzw. ausgeschnitten worden ist. Besonderer Vorteil des erfindungsgemäßen Filtermaterials 2 und der daraus ausgeschnittenen Filterkörper 20 ist die Formstabilität der Filterkörper 20. Auch hier sei erwähnt, dass die dargestellte geometrische Form des Filterkörpers 20 nicht als eine Beschränkung der Erfindung aufgefasst werden kann. Aus dem Filtermaterial 2 können Filterkörper 20 jeglicher Form und Größe geschnitten werden. Einzige Bedingung ist, dass die ausgeschnittenen Filterkörper 20 auch die Oberseite 21 und die Unterseite 22 des Filtermaterials 2 aufweisen müssen.

**Figur 5** zeigt eine Draufsicht auf die obere Fläche 21 des Filtermaterials 2. Mit einem nicht dargestellten Schneidemittel wird eine Schnittlinie 36 für den zylinderförmigen Filtereinsatz 10 bzw. ein zylinderförmiges Einzelelement 10₁, 10₂,..., 10_{N} (siehe Figur 7) für den zylinderförmigen Filtereinsatz 10 im Filtermaterial 2 ausgebildet. Der ausgeschnittene zylinderförmige Filtereinsatz 10 bzw. ein ausgeschnittenes zylinderförmiges Einzelelement 10₁, 10₂,..., 10_{N} für den zylinderförmigen Filtereinsatz 10 ist in **Figur 6** in einer perspektivischen Ansicht dargestellt. Der zylinderförmige Filtereinsatz 10 umfasst zumindest eine Vlieslage 4₁, 4₂, ..., 4_{N}. Die Vlieslagen 4₁, 4₂, ..., 4_{N} liegen im Wesentlichen senkrecht zu einer Schnittlinie 36. Der zylinderförmige Filtereinsatz 10 weist einen äußeren Durchmesser DA auf.

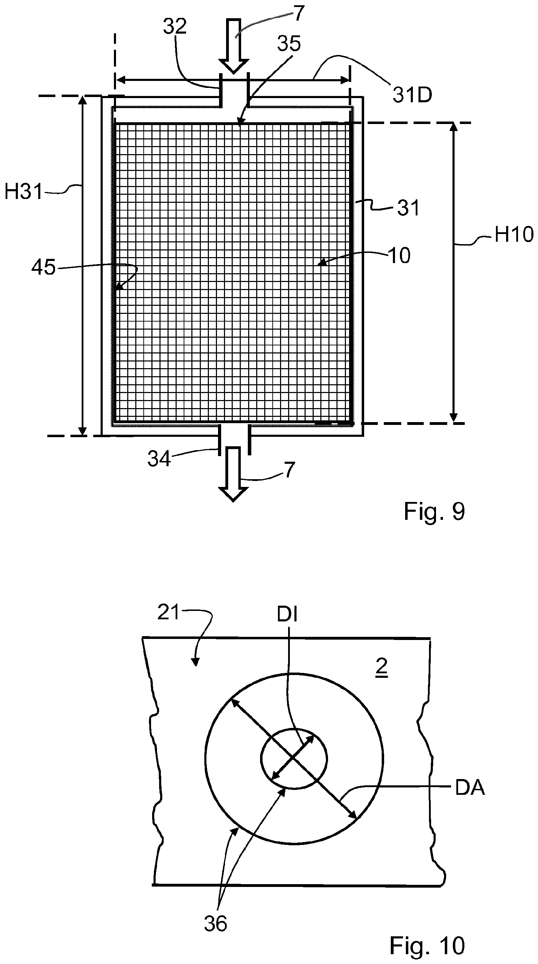

**Figur 7** zeigt eine perspektivische Ansicht der Zusammenstellung mehrerer zylinderförmiger Einzelelemente 10₁, 10₂,..., 10_{N} für den zylinderförmigen Filtereinsatz 10. Bei dem dargestellten Ausführungsbeispiel sind vier zylinderförmige Einzelelemente 10₁, 10₂, 10₃ und 10₄ entlang der Längsachse L des Filtereinsatzes 10 gestapelt. Es ist selbstverständlich, dass die Anzahl der gestapelten, zylinderförmigen Einzelelemente 10₁, 10₂,..., 10_{N} nicht als eine Beschränkung der Erfindung aufgefasst werden soll. Die Anzahl der benötigten zylinderförmigen Einzelelemente 10₁, 10₂,..., 10_{N} richtet sich nach der Höhe H31 des Filtergehäuses 31 (siehe Fig. 9) für den Filtereinsatz 10.

**Figur 8** zeigt eine schematische Ansicht einer möglichen Ausführungsform einer Filtrationsanordnung 30 zum Filtern von flüssigen Medien 7, bei der die Ausführungsform des erfindungsgemäßen zylinderförmigen Filtereinsatzes (hier nicht zu sehen) zum Einsatz kommt. Über einen Zulauf 32 wird der Filtrationsanordnung 30 das zu filternde flüssige Medium 7 zugeführt. Die Filtrationsanordnung 30 umfasst ein Filtergehäuse 31, das mit einem Deckel 39 verschlossen werden kann. Im Deckel 39 endet der Zulauf 32. Die Filtrationsanordnung 30 ist über einen Boden 37 verschlossen. Vom Boden 37 aus wird über einen Ablauf 34 das gefilterte Medium 7 abgeführt. Das gefilterte Medium 7 kann z.B. in einen Speicher, ein Schwimmbecken, ein Aquarium oder dergleichen übergeführt werden.

**Figur 9** zeigt eine Schnittansicht durch das Filtergehäuse 31 der Filtrationsanordnung 30. In das Filtergehäuse 31 ist der Filtereinsatz 10 bzw. das mindestens eine Einzelelement 10₁, 10₂,..., 10_{N} eingesetzt. Der Filtereinsatz 10 sitzt dabei zwischen dem Zulauf 32 und dem Ablauf 34. Der aus dem Filtermaterial 2 bestehende Filtereinsatz 10 ist derart gestaltet, dass er einen äußeren Durchmesser DA (siehe Fig. 6) besitzt, der größer ist als ein Durchmesser 31D des Filtergehäuses 31. Das Filtergehäuse 31 der Filtrationsanordnung 30 hat eine Höhe H31, die größer oder gleich einer Höhe H10 des Filtereinsatzes 10 ist. Der zylinderförmige Filtereinsatz 10 oder die mehreren einzelnen zylinderförmigen Einzelelemente 10₁, 10₂,..., 10_{N} haben eine Höhe H10, die kleiner oder gleich der Höhe H31 des Filtergehäuses 31 der Filtrationsanordnung 30 ist. Die einzelnen zylinderförmigen Filtereinsätze 10 können sich hinsichtlich ihres Flächengewichts oder der Materialdichte unterscheiden, so dass man einen gesamten Filtereinsatz 10 erhält, der eine Abstufung bzw. einen Gradienten in den Filtrationseigenschaften aufweist.

Durch die Dimensionierung des äußeren Durchmessers DA des Filtereinsatzes 10 wird der Innenraum 35 des Filtergehäuses 31 ausgefüllt. Da der Filtereinsatz 10 einen größeren äußeren Durchmesser 10A besitzt als der Durchmesser 31D des Filtergehäuses 31, liegt der zylinderförmige Filtereinsatz 10, der auch elastisch deformierbar ist, vollflächig an einer den Innenraum 35 definierenden inneren Wand 45 des Filtergehäuses 31 an. Dies hat den Vorteil, dass das zu filternde Medium 7 auf dem Weg vom Zulauf 32 zum Ablauf 34 ausschließlich den Filtereinsatz 10 und somit das Filtermaterial 2 passieren muss. Dadurch ist sichergestellt, dass eine effektive Filterung des zu filternden Mediums 7 erfolgt. Ein Weg des zu filternden Mediums 7 am Filtereinsatz 10 vorbei ist ausgeschlossen.

**Figur 10** zeigt eine Draufsicht auf die obere Fläche 21 des elastisch deformierbaren Filtermaterials 2. Mit einem nicht dargestellten Schneidemittel wird eine Schnittlinie 36 für den rohrförmigen Filtereinsatz 10 bzw. ein rohrförmiges Einzelelement 10₁, 10₂,..., 10_{N} für den rohrförmigen Filtereinsatz 10 im Filtermaterial 2 ausgebildet. Der ausgeschnittene rohrförmige Filtereinsatz 10 bzw. ein ausgeschnittenes rohrförmiges Einzelelement 10₁, 10₂,..., 10_{N} für den rohrförmigen Filtereinsatz 10 ist in **Figur 11** in einer perspektivischen Ansicht dargestellt. Die Vlieslagen 4₁, 4₂, ..., 4_{N} liegen im Wesentlichen senkrecht zu der Schnittlinie 36. Wie aus Figur 10 ersichtlich ist, besitzt der ausgeschnittene rohrförmige Filtereinsatz 10 bzw. ein ausgeschnittenes rohrförmiges Einzelelement 10₁, 10₂,..., 10_{N} für den rohrförmigen Filtereinsatz 10 einen Durchmesser DA und einen inneren Durchmesser DI.

**Figur 12** zeigt eine perspektivische Ansicht der Zusammenstellung mehrerer rohrförmiger Einzelelemente 10₁, 10₂,..., 10_{N} für den rohrförmigen Filtereinsatz 10. Bei dem dargestellten Ausführungsbeispiel sind vier rohrförmige Einzelelemente 10₁, 10₂, 10₃ und 10₄ entlang der Längsachse L des Filtereinsatzes 10 gestapelt. Es ist selbstverständlich, dass die Anzahl der gestapelten, rohrförmigen Einzelelemente 10₁, 10₂,..., 10_{N} nicht als eine Beschränkung der Erfindung aufgefasst werden soll. Die Anzahl der benötigten rohrförmigen Einzelelemente 10₁, 10₂,..., 10_{N} richtet sich nach der Höhe H15 der Aufnahme 15 (siehe Fig. 17) für den Filtereinsatz 10.

**Figur 13** zeigt eine perspektivische Ansicht des rohrförmigen Filtereinsatzes 10, der bei der hier gezeigten Ausführungsform zwischen einer äußeren, zylinderförmigen Stabilisierung 16S und einer inneren, zylinderförmigen Stabilisierung 17S sitzt. Die Aufnahme 15 (siehe Fig. 15) ist somit durch die äußere, zylinderförmige Stabilisierung 16S und die innere, zylinderförmige Stabilisierung 17S gebildet. Die äußere zylinderförmige Stabilisierung 16S umfasst mehrere Durchlässe 8 und die innere zylinderförmige Stabilisierung 17S umfasst mehrere Durchlässe 9. Bei der hier dargestellten Ausführungsform sind die Durchlässe 8 und 9 derart bemessen, dass deren Gesamtfläche größer ist als die undurchlässige und flexible Struktur der äußeren zylinderförmigen Stabilisierung 16S und der inneren zylinderförmigen Stabilisierung 17S. Bei der hier gezeigten Ausführungsform entspricht die äußere zylinderförmige Stabilisierung 16S der äußeren, zylinderförmigen Wand 16 und die innere zylinderförmige Stabilisierung 17S der inneren zylinderförmigen Wand 17 einer Aufnahme 15 (siehe Fig. 15).

**Figur 14** zeigt eine Draufsicht auf einen rohrförmigen Filtereinsatz 10, der aus mindestens einem quaderförmigen Filtermaterial 2 gebildet ist. Das quaderförmige Filtermaterial 2 eines jeden Rohres 11 umfasst drei Vlieslagen 4₁, 4₂ und 4₃. Es ist für einen Fachmann selbstverständlich, dass die Anzahl der Vlieslagen 4₁, 4₂, ..., 4_{N} nicht als Beschränkung der Erfindung aufgefasst werden soll. Die Anzahl der Vlieslagen 4₁, 4₂, ..., 4_{N} kann in Bezug auf den konkreten Anwendungsfall angepasst werden. Wie in der Beschreibung zu Fig. 2 bereits erwähnt, können aus dem quaderförmigen Filtermaterial 2 das mindestens eine Rohr für den rohrförmigen Filtereinsatz 10 hergestellt werden. Das Rohr 11 ist über die erste Stirnfläche 23 und die zweite Stirnfläche 24 des quaderförmigen Filtermaterials 2 verbunden (die Art und Weise der Verbindung wird nachstehend erläutert).

**Figur 15A und Figur 15B** zeigen verschiedene Ansichten, wie aus dem quaderförmigen Filtermaterial 2 der rohrförmige Filtereinsatz 10 entsteht und aufrechterhalten bleibt. Figur 15A ist eine vergrößerte Darstellung des in Figur 14 mit B gekennzeichneten Bereichs. Das quaderförmige Filtermaterial 2 wird dabei derart verformt, dass die erste Stirnfläche 23 und die zweite Stirnfläche 24 aneinander zu liegen kommen. Bei der hier gezeigten Ausführungsform werden die erste Stirnfläche 23 und die zweite Stirnfläche 24 mit mehreren lösbaren Verbindungen 28 derart zusammengehalten, dass der rohrförmige Filtereinsatz 10 seine Form behält. Die lösbaren Verbindungen 28 können z. B. in Form von Klettverschlüssen, Schnappverschlüssen, usw. ausgebildet sein.

Bei der in den **Figuren 16A und 16B** gezeigten Ausführungsform werden die erste Stirnfläche 23 und die zweite Stirnfläche 24 des quaderförmigen Filtermaterials 2 mit permanenten Verbindungen 29 permanent miteinander verbunden. Figur 16A ist eine vergrößerte Darstellung des in Figur 14 mit B gekennzeichneten Bereichs. Die permanenten Verbindungen 29 können z. B. mittels Laserschweißen, Ultraschall, Verkleben, usw. hergestellt werden. Ebenso ist es denkbar, dass ebenfalls eine Mischung aus lösbaren Verbindungen 28 und permanenten Verbindungen 29 vorgesehen sein kann, um den rohrförmigen Filtereinsatz 10 in seiner Form zu stabilisieren. Bei den hier gezeigten Ausführungsformen sind die lösbaren Verbindungen 28 bzw. die permanenten Verbindungen 29 auf der Außenfläche 10A des rohrförmigen Filtereinsatzes 10 angebracht. Es ist für einen Fachmann selbstverständlich, dass dies keine Beschränkung der Erfindung darstellen soll. Selbstverständlich können die lösbaren Verbindungen 28, sowie die permanenten Verbindungen 29 auch auf der Innenfläche 10B des rohrförmigen Filtereinsatzes vorgesehen sein.

**Figur 17** zeigt eine perspektivische Ansicht einer Aufnahme 15 für den rohrförmigen Filtereinsatz 10, der z.B. keine äußere zylinderförmige Stabilisierung 16S und keine innere zylinderförmige Stabilisierung 17S aufweist. Die Aufnahme 15 besitzt eine Höhe H15 und besteht aus einem äußeren Rohr 18 und einem inneren Rohr 19. Zwischen dem inneren Rohr 19 und dem äußeren Rohr 18 ist der rohrförmige Filtereinsatz 10 vorgesehen. Damit das zu filternde Medium 7 (siehe Figur 2) an den rohrförmigen Filtereinsatz 10 gelangen kann, hat die äußere zylinderförmige Wand 16 des äußeren Rohrs 18 mehrere Durchlässe 8 ausgebildet. Damit das gefilterte Medium 7 von dem rohrförmigen Filtereinsatz 10 durch die innere zylinderförmige Wand 17 des inneren Rohrs 19 gelangt, hat das innere Rohr 19 ebenfalls mehrere Durchlässe 9 (siehe Figur 18) ausgebildet. Die gestrichelte Linie soll verdeutlichen, dass sich die Durchlässe 8 über die gesamte äußere zylinderförmige Wand 16 erstrecken. Analoges gilt für die Durchlässe 9 in der inneren zylinderförmigen Wand 17. Zwischen dem inneren Rohr 19 und dem äußeren Rohr 18 ist ein innerer Freiraum 35 ausgebildet, der bei der hier beschriebenen Ausführungsform für die Aufnahme des rohrförmigen Filtereinsatzes 10 bzw. des mindestens einen Einzelelements 10₁, 10₂,..., 10_{N} dient. Mittels der Dimensionierung des äußeren Durchmessers DA des Filtereinsatzes 10 wird der Innenraum 35 des Filtergehäuses 31 ausgefüllt. Da der Filtereinsatz 10 einen größeren äußeren Durchmesser DA besitzt als der Durchmesser 31D des Filtergehäuses 31, liegt der rohrförmige Filtereinsatz 10, der auch elastisch deformierbar ist, vollflächig an einer den Innenraum 35 definierenden inneren Wand 45 (siehe Figur 9) des Filtergehäuses 31 an.

**Figur 18** zeigt eine schematische Schnittansicht einer Filtrationsanordnung 30, gemäß der gegenwärtigen Erfindung. Die Aufnahme 15 (siehe Figur 15) für den rohrförmigen Filtereinsatz 10 sitzt in einem Filtergehäuse 31. Das Filtergehäuse 31 hat einen Zulauf 32 für das zu filternde Medium 7 ausgebildet. Über den Zulauf und die Durchlässe 8 in dem äußeren Rohr 18 gelangt das zu filternde Medium 7 zu dem rohrförmigen Filtereinsatz 10. Über entsprechende Durchlässe 9, die in der inneren zylinderförmigen Wand 17 des inneren Rohrs 19 ausgebildet sind, gelangt das zu filternde Medium 7 in das Innere des inneren Rohrs 19. Von dort kann das gefilterte Medium 7 über einen Ablauf 34, den das innere Rohr 19 ausgebildet hat, abgeführt werden. Das gefilterte Medium 7 kann somit wieder dem Pool, dem Whirlpool, oder dergleichen, zugeführt werden. Im Wesentlichen durchströmt das zu filternde Medium 7 den rohrförmigen Filtereinsatz 10 in einer Richtung, die im Wesentlichen senkrecht zu der Längsachse L der Aufnahme 15 für den rohrförmigen Filtereinsatz 10 ist.

Das Material für die Aufnahme 15 des rohrförmigen Filtereinsatzes 10 kann z. B. ein Thermoplast oder ein Metall sein. Ein bevorzugtes Material für die Aufnahme 15 kann Edelstahl sein. Die Durchlässe 8 und 9 für das äußere Rohr 18 bzw. das innere Rohr 19 können im Fall von Edelstahl mittels Laserschneiden oder Stanzen eingebracht werden. Die Aufnahme 15 weist einen Boden 14 auf, auf dem das innere Rohr 19 sitzt und somit in Richtung des Zulaufs 32 hin verschlossen ist. In Richtung des Ablaufs 34 ist das innere Rohr 19 offen, so dass das gefilterte Medium 7 aus der Filtrationsanordnung 30 abgeführt werden kann. Die Aufnahme 15 ist im Bereich des Ablaufs 34 durch einen ringförmigen Deckel 13 verschlossen, so dass der Ablauf 34 aus dem inneren Rohr 19 heraus frei bleibt. Durch den Boden 14 und den ringförmigen Deckel 13 der Aufnahme 15 wird erreicht, dass das zu filternde Medium 7 in der Filtrationsanordnung 30 von der äußeren zylinderförmigen Wand 16 aus dem ringförmigen Filtereinsatz 10 zur inneren zylinderförmigen Wand 17 hin durchströmt und somit eine effektive Filterung im rohrförmigen Filtereinsatz 10 bereitstellt.

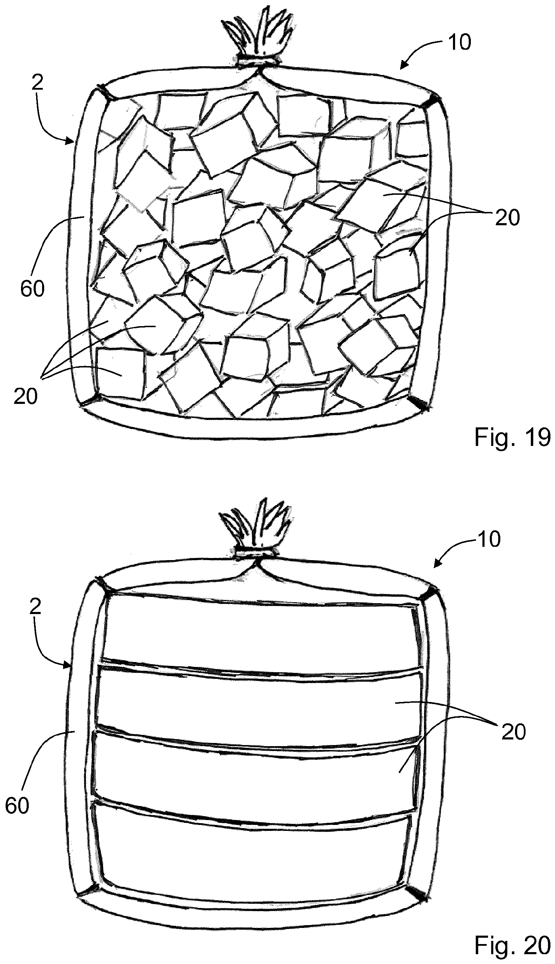

**Figur 19** zeigt eine Schnittansicht einer weiteren möglichen Ausführungsform der Ausgestaltung des Filtereinsatzes 10. Der Filtereinsatz 10 besteht aus einem Beutel 60. Der Beutel 60 kann aus dem Filtermaterial 2 mit einer Vlieslage 4₁ oder aus dem Filtermaterial 2 mit den mehreren benachbarten einzelnen Vlieslagen 4₁, 4₂, ..., 4_{N} gefertigt sein. Dabei ist der Beutel 60 derart gefertigt, dass er im Wesentlichen der Form des Filtergehäuses 31 entspricht. Der Beutel 60 ist mit mehreren geometrischen Filterkörpern 20 gefüllt ist. Die geometrischen Filterkörper 20 sind bei der hier beschriebenen Ausführungsform quaderförmig. Die Filterkörper 60 werden aus dem Filtermaterial 2 mit den mehreren benachbarten einzelnen Vlieslagen 4₁, 4₂, ..., 4_{N} geschnitten. Die Anzahl der geometrischen Filterkörper 20 ist derart gewählt, dass sie den Beutel 60 ausfüllen und dieser eine stabile Form annimmt, die im Wesentlichen das Innere des Filtergehäuses 31 ausfüllen kann.

**Figur 20** zeigt eine Schnittansicht einer zusätzlich möglichen Ausführungsform der Ausgestaltung des Filtereinsatzes 10. Auch hier kann der Beutel 60 aus dem Filtermaterial 2 mit einer Vlieslage 4₁ oder aus dem Filtermaterial 2 mit den mehreren benachbarten einzelnen Vlieslagen 4₁, 4₂, ..., 4_{N} gefertigt sein. Der Beutel 60 ist mit geometrischen Filterkörpern 20 gefüllt, die zylinderförmig sind. Die Filterkörper 20 werden ebenfalls aus dem Filtermaterial 2 mit den mehreren benachbarten einzelnen Vlieslagen 4₁, 4₂, ..., 4_{N} geschnitten. Die Anzahl der geometrischen Filterkörper 20 ist derart gewählt, dass sie den Beutel 60 ausfüllen. Die einzelnen zylinderförmigen Filterkörper 20 können sich im Flächengewicht oder der Materialdichte unterscheiden. So kann z.B. direkt nach dem Zulauf 32 (siehe Fig. 17) für das zu filternde Medium 7 ein Filterkörper 20 mit geringem Flächengewicht oder Materialdichte vorgesehen sein. Das Flächengewicht der Filterkörper 20 kann im Filtereinsatz 10 vom Zulauf 32 zum Ablauf 34 hin zunehmen. Mit der Abstufung des Flächengewichts oder der Materialdichte erreicht man folglich eine Abstufung der Filtrationseigenschaften des Filtereinsatzes 10.

Der in den Figuren 19 und 20 gezeigte Beutel 60 kann nach dem Füllen mit den geometrischen Filterkörpern 20 permanent verschlossen werden. Ebenso kann der Beutel 60 derart ausgestaltet werden, dass er geöffnet werden kann, um die Filterkörper 20 auszuwechseln. Für den Beutel 60 empfiehlt es sich erfindungsgemäß, ein Filtermaterial 2 zu verwenden, das ein geringeres oder zumindest gleich großes Flächengewicht oder Materialdichte besitzt, als die im Beutel 60 vorgesehenen geometrischen Filterkörper 20.

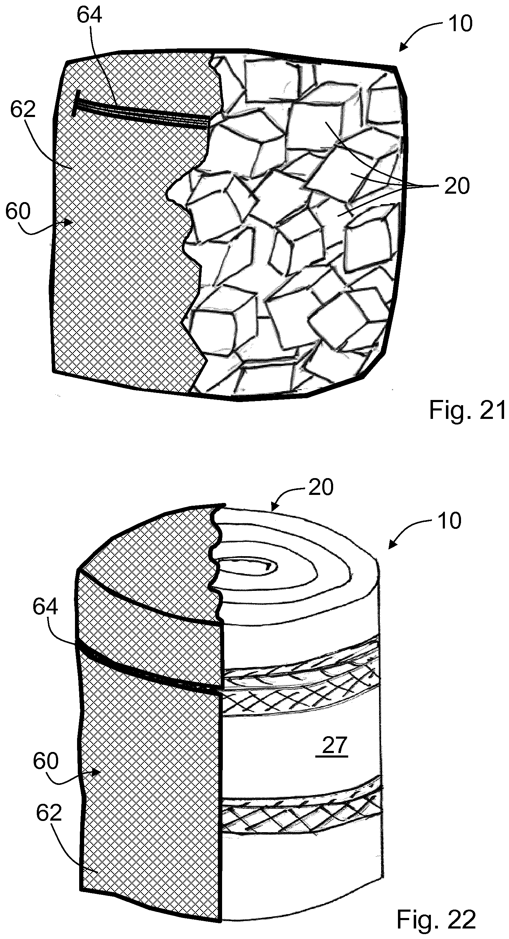

**Figur 21** zeigt im Teilschnitt eine Ansicht einer möglichen Ausführungsform der Ausgestaltung des Filtereinsatzes 10. Der Beutel 60 zur Aufnahme der geometrischen Filterkörper 20 ist aus einem für das zu filternde Medium 7 durchlässigen, netzartigen Material 62 gefertigt. Nach dem Füllen mit den geometrischen Filterkörpern 20 kann der Beutel 60 z.B. mit einen Reißverschluss 64 verschlossen werden. Der verschlossene Beutel 60 kann derart zurecht geformt werden, dass er in das Filtergehäuse 31 passt.

**Figur 22** zeigt im Teilschnitt eine Ansicht einer möglichen Ausführungsform der Ausgestaltung des Filtereinsatzes 10. Der Beutel 60 zur Aufnahme des geometrischen Filterkörpers 20, der die Form eines Zylinders 27 hat, ist aus einem für das zu filternde Medium 7 durchlässigen, netzartigen Material 62 gefertigt. Der Beutel 60 hat ebenfalls die Form eines Zylinders. Nach dem Einbringen des Filterkörpers 20 in den Beutel 60, kann dieser z.B. mit einem Reißverschluss 64 verschlossen werden. Der Filterkörper 20 bzw. der Beutel 60 kann derart bemessen sein, dass er das Filtergehäuse 31 ausfüllt. Auch können mehrere Beutel 60 mit den Zylindern 27 gestapelt werden (analog zu Fig. 13), um entsprechend dimensionierte Filtergehäuse 31 zu füllen.

Die Erfindung wurde unter Bezugnahme auf bevorzugte Ausführungsformen beschrieben, Es ist für einen Fachmann selbstverständlich, dass Änderungen und Abwandlungen der Erfindung ausgeführt werden können, ohne den Schutzbereich der nachstehenden Ansprüche zu verlassen.

### Bezugszeichenliste

- 2: Filtermaterial
- 4₁, 4₂, ..., 4_{N}: Vlieslage
- 6: Endlosfasern
- 7: zu filterndes Medium, gefiltertes Medium
- 8: Durchlass
- 9: Durchlass
- 10: Filtereinsatz
- 10₁, 10₂,..., 10_{N}: Einzelelement
- 10A: Außenfläche
- 10B: Innenfläche
- 11: Rohr
- 12: Schmutzpartikel
- 13: ringförmiger Deckel
- 14: Boden
- 15: Aufnahme
- 16: äußere zylinderförmige Wand
- 16S: äußere zylinderförmige Stabilisierung
- 17: innere zylinderförmige Wand
- 17S: innere zylinderförmige Stabilisierung
- 18: äußeres Rohr
- 19: inneres Rohr
- 20: geometrischer Filterkörper
- 21: obere Fläche
- 22: untere Fläche
- 23: erste Stirnfläche
- 24: zweite Stirnfläche
- 27: Zylinder
- 28: lösbare Verbindung
- 29: permanente Verbindung
- 30: Filtrationsanordnung
- 31: Filtergehäuse
- 31D: Durchmesser
- 32: Zulauf
- 34: Ablauf
- 35: Innenraum, innerer Freiraum
- 36: Schnittlinie
- 37: Boden
- 39: Deckel
- 45: innere Wand
- 60: Beutel
- 62: netzartiges Material
- 64: Reißverschluss
- A: Abstand
- B: Bereich
- DA: äußerer Durchmesser
- DI: innerer Durchmesser
- H10: Höhe Filtereinsatz
- H15: Höhe der Aufnahme
- H31: Höhe Filtergehäuse
- L: Längsachse
- U: Umfang

## Patentansprüche

1. Filtereinsatz (10) für eine Filtrationsanordnung (30) zum Filtern flüssiger Medien (7), wobei ein quaderförmiges Filtermaterial (2) des Filtereinsatzes (10) aus einer Verbundvlieslage aus mehreren einzelnen Vlieslagen (4₁, 4₂, ..., 4_{N}) aus einer Vielzahl von Endlosfasern (6) aufgebaut ist, die untereinander verbunden sind, wobei die Vielzahl von Endlosfasern (6) einer jeden Vlieslage (4₁, 4₂, ..., 4_{N}) zu einem definierten Grad mit anderen Endlosfasern (6) stoffschlüssig miteinander verbunden sind und wobei die Endlosfasern (6) einer Vlieslage (4₁, 4₂, ..., 4_{N}) in benachbarte Vlieslagen (4₁, 4₂, ..., 4_{N}) greifen und ebenfalls gemäß dem definierten Grad mit den Endlosfasern (6) der benachbarten einzelnen Vlieslagen (4₁, 4₂, ..., 4_{N}) verbunden sind,
**dadurch gekennzeichnet, dass**
der Filtereinsatz (10) aus mindestens einem elastisch deformierbaren Einzelelement (10₁, 10₂,..., 10_{N}) besteht, wobei das mindestens eine elastisch deformierbare Einzelelement (10₁, 10₂,..., 10_{N}) aus dem quaderförmigen Filtermaterial (2) gebildet ist und wobei das mindestens eine elastisch deformierbare Einzelelement (10₁, 10₂,..., 10_{N}) einen äußeren Durchmesser (DA) besitzt, der größer ist als ein Durchmesser (31D) eines Filtergehäuses (31), so dass das mindestens eine elastisch deformierbare Einzelelement (10₁, 10₂,..., 10_{N}) an einer einen Innenraum (35) des Filtergehäuses (31) definierenden inneren Wand (45) anliegt.

2. Filtereinsatz (10) nach Anspruch 1, wobei mindestens ein Einzelelement (10₁, 10₂,..., 10_{N}) zylinderförmig ist.

3. Filtereinsatz (10) nach Anspruch 2, wobei das mindestens eine zylinderförmige Einzelelement (10₁, 10₂,..., 10_{N}) aus dem elastisch deformierbaren Filtermaterial (2) entlang einer Schnittlinie (36) geschnitten ist und die einzelnen Vlieslagen (4₁, 4₂, ..., 4_{N}) senkrecht zu einer Längsachse (L) des zylinderförmigen Einzelelements (10₁, 10₂,..., 10_{N}) ausgerichtet sind.

4. Filtereinsatz (10) nach Anspruch 1, wobei das mindestens eine elastisch deformierbare Einzelelement (10₁, 10₂,..., 10_{N}) rohrförmig ist und eine Außenfläche (10A) und eine Innenfläche (10B) besitzt.

5. Filtereinsatz (10) nach Anspruch 4, wobei beim dem mindestens einen elastisch deformierbaren, rohrförmigen Einzelelement (10₁, 10₂,..., 10_{N}) die Vlieslagen (4₁, 4₂, ..., 4_{N}) parallel zueinander und radial zu einer Längsachse (L) des rohrförmigen Einzelelements (10₁, 10₂,..., 10_{N}) verlaufen.

6. Filtereinsatz (10) nach einem der vorangehenden Ansprüche 4 bis 5, wobei das mindestens eine rohrförmige und elastisch deformierbare Einzelelement (10₁, 10₂,..., 10_{N}) aus mindestens einer Lage des quaderförmigen Filtermaterials (2) gebildet ist.

7. Filtereinsatz (10) nach Anspruch 4, wobei das rohrförmige und elastisch deformierbaren Einzelelement (10₁, 10₂,..., 10_{N}) aus dem quaderförmigen Filtermaterial (2) geschnitten ist, wobei die Vlieslagen (4₁, 4₂, ..., 4_{N}) im Wesentlichen senkrecht zu einer Schnittlinie (36) liegen.

8. Filtereinsatz (10) nach einem der vorangehenden Ansprüche 4 bis 7, wobei mehrere rohrförmige und elastisch deformierbare Einzelelemente (10₁, 10₂,..., 10_{N}) entlang einer Längsachse (L) gestapelt sind und den betriebsbereiten Filtereinsatz (10) bilden.

9. Filtrationsanordnung (30) für flüssige Medien (7), umfassend ein Filtergehäuse (31) mit einem Zulauf (32) für das zu filternde Medium (7) und einem Ablauf (34) für das gefilterte Medium (7), einem Filtereinsatz (10) für das Filtergehäuse (31), der im Wesentlichen eine Höhe (H31) des Filtergehäuses (31) aufweist, und wobei der Filtereinsatz (10) mindestens ein elastisch deformierbares Einzelelement (10₁, 10₂,..., 10_{N}) umfasst, das aus einem im Wesentlichen quaderförmigen Filtermaterial (2) gebildet ist, wobei das Filtermaterial (2) aus mehreren einzelnen Vlieslagen (4₁, 4₂, ..., 4_{N}) aus einer Vielzahl von Endlosfasern (6) aufgebaut ist, die untereinander verbunden sind, **dadurch gekennzeichnet, dass** das mindestens eine elastisch deformierbare Einzelelement (10₁, 10₂,..., 10_{N}) einen äußeren Durchmesser (DA) besitzt, der größer ist als ein Durchmesser (31D) eines Filtergehäuses (31), so dass das mindestens eine elastisch deformierbare Einzelelement (10₁, 10₂,..., 10_{N}) zumindest an einer einen Innenraum (35) des Filtergehäuses (31) definierenden inneren Wand (45) anliegt.

10. Filtrationsanordnung (30) nach Anspruch 9 wobei der Filtereinsatz (10) aus mindestens einem zylinderförmigen Einzelelement (10₁, 10₂,..., 10_{N}) besteht.

11. Filtrationsanordnung (30) nach Anspruch 10, wobei das mindestens eine zylinderförmige Einzelelement (10₁, 10₂,..., 10_{N}) von einem Beutel (60) umgeben ist, der die Form des zylinderförmigen Einzelelements (10₁, 10₂,..., 10_{N}) besitzt und aus einem für das zu filternde Medium (7) durchlässigen, netzartigen Material (62) gefertigt und verschließbar ausgebildet ist.

12. Filtrationsanordnung (30) nach Anspruch 10, wobei der Filtereinsatz (10) einen Beutel (60) aus einem für das zu filternde Medium (7) durchlässigen, netzartigen Material (62) umfasst, in den mehrere aus dem Filtermaterial (2) geschnittene geometrische Filterkörper (20) füllbar sind, und der Beutel (60) nach dem Füllen verschließbar ist.

13. Filtrationsanordnung (30) nach Anspruch 12, wobei der gefüllte Beutel (60) ein derartiges Volumen aufweist und derart formbar ist, dass er an der den Innenraum (35) definierenden inneren Wand (45) des Filtergehäuses (31) anliegt.

14. Filtrationsanordnung (30) nach Anspruch 9, wobei in der Filtrationsanordnung (30) eine Aufnahme (15) für den Filtereinsatz (10) vorgesehen ist, die eine für das zu filternde Medium (7) durchlässige äußere zylinderförmige Wand (16) und eine innere zylinderförmige Wand (17) aufweist und zwischen der äußeren zylinderförmigen Wand (16) und der inneren zylinderförmigen Wand (17) der rohrförmige Filtereinsatz (10) sitzt.

15. Filtrationsanordnung (30) nach Anspruch 14, wobei der Filtereinsatz (10) direkt in das Filtergehäuse (31) der Filtrationsanordnung (30) eingesetzt und derart geformt ist, dass der Filtereinsatz (10) an einer einen Innenraum (35) definierenden inneren Wand (45) des Filtergehäuses (31) anliegt und der Filtereinsatz (10) für das zu filternde Medium (7) zwischen dem Zulauf (32) und dem Ablauf (34) positioniert ist.
